# FASCICULE DE BREVET EUROPEEN

(11) **EP 4 491 465 B1**
(45) Date de publication et mention de la délivrance du brevet: **13.05.2026**
(21) Numéro de dépôt: 24187322.3
(22) Date de dépôt: 09.07.2024
(51) Int. Cl.: B60T 1/00, B60T 1/06, F16D 63/00

(54) **MÉCANISME DE BLOCAGE**
VERRIEGELUNGSMECHANISMUS
LOCKING MECHANISM

(30) Priorité: 11.07.2023 FR 2307448
(43) Date de publication de la demande: 15.01.2025
(73) Titulaire: VALEO EMBRAYAGES, 80009 Amiens (FR)
(72) Inventeur: MOLLIER, Christophe, 80009 AMIENS (FR); LONGUENT, Stéphane, 80009 AMIENS (FR); FAFET, Olivier, 80009 AMIENS (FR); BARRY, Alain, 80009 AMIENS (FR); MAURICE, Benoit, 95892 CERGY PONTOISE (FR)
(74) Mandataire: Valeo Powertrain Systems

(56) Documents cités:
- DE-A1- 102019 101 467
- US-A1- 2022 090 678

## Description

### Domaine technique

La présente invention concerne un mécanisme de blocage pour le blocage en rotation d'un arbre d'une chaîne de transmission d'un appareil de mobilité, tel qu'un véhicule automobile par exemple.

### Arrière-plan technologique

Des mécanismes de blocage sont utilisés, par exemple, comme frein de stationnement afin de sécuriser un véhicule automobile à l'arrêt. Dans un tel cas, ils permettent de bloquer en rotation un arbre de transmission du véhicule automobile. De tels mécanismes de blocage sont notamment utilisés dans les véhicules automobiles à transmission automatique, dans les véhicules hybrides ou les véhicules électriques.

Il est connu, notamment du document FR3128754, des mécanismes de blocage comprenant un cliquet équipé d'un doigt de verrouillage et monté pivotant sur un carter de transmission entre une position libérée et une position de verrouillage dans laquelle le doigt de verrouillage est inséré dans un évidement de verrouillage solidaire en rotation de l'arbre de transmission à bloquer. Le mécanisme de blocage comporte en outre un actionneur qui déplace un chariot mobile qui est guidé en translation sur le carter de transmission au moyen d'un rail de guidage. Le chariot mobile comporte un galet qui coopère avec une surface de came du cliquet de sorte qu'un mouvement de translation du chariot mobile entraîne le pivotement du cliquet. Le rail de guidage est une pièce de tôle emboutie comportant plusieurs parois pliées permettant son positionnement par emboitement dans un logement aménagé dans le carter de transmission. Plus précisément, le rail de guidage comporte quatre parois pliées à un angle de 90 degrés pour obtenir une forme globale rectangulaire et, de manière correspondante, le logement comporte quatre faces usinées en vis-à-vis des quatre parois du rail de guidage afin d'assurer leur positionnement.

Une telle structure du mécanisme de blocage est de conception simple, facile à assembler et suffisamment robuste pour résister aux contraintes mécaniques importantes pouvant survenir pendant le passage de la position libérée à la position de verrouillage. DE 10 2019 101467 A11 divulgue un support arrière de cliquet de frein fixé avec des vis.

Cependant, une telle structure pose plusieurs problèmes techniques :
- le rail de guidage, de par son grand nombre de parois pliées, présente une forme complexe qui est difficile à fabriquer ;
- la réalisation des surfaces du logement du rail de guidage dans le carter nécessite une grande quantité d'enlèvement de matière par usinage ;
- le positionnement du rail de guidage par rapport à son logement dans le carter n'est pas assez précis car dépendant de la somme des tolérances de fabrication d'un nombre important de dimensions géométriques.

Ainsi, il est nécessaire de proposer un mécanisme de blocage qui soit plus économique, plus facile à mettre en œuvre et permettant de positionner le rail de guidage de manière plus précise.

### Résumé

Dans tout ce qui suit, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

Une idée à la base de l'invention est un mécanisme de blocage destiné à bloquer en rotation un arbre d'un véhicule.

Une idée à la base de l'invention est un mécanisme de blocage qui permet de résoudre un ou plusieurs problèmes techniques de l'art antérieur, par exemple les problèmes susmentionnés.

L'invention concerne un mécanisme de blocage apte à bloquer en rotation un arbre d'un véhicule équipé d'au moins un évidement de verrouillage, le mécanisme de blocage comprenant :
- un carter de transmission comportant un logement, le logement comportant une première face de positionnement et une deuxième face de positionnement, la première face de positionnement et la deuxième face de positionnement formant une fente de positionnement ;
- un cliquet mobile comprenant un doigt de verrouillage, le cliquet mobile étant monté pivotant dans un plan autour d'un axe de pivotement sur le carter de transmission entre une position de verrouillage dans laquelle le doigt de verrouillage est engagé dans l'évidement de verrouillage et une position libérée dans laquelle le doigt de verrouillage est désengagé dudit évidement de verrouillage, le cliquet mobile comprenant une surface de came ;
- un actionneur qui déplace un dispositif de poussée, le dispositif de poussée comportant un suiveur de came apte à se déplacer sur la surface de came afin de déplacer le cliquet mobile de la position libérée vers la position de verrouillage ;
- un rail de guidage comportant une paroi de guidage guidant le déplacement du dispositif de poussée et une paroi de positionnement ;
la paroi de positionnement du rail de guidage étant insérée dans la fente de positionnement du logement.

Grâce à ces caractéristiques, un positionnement du rail de guidage dans une direction choisie du plan est assuré de manière très précise car ce positionnement ne dépend uniquement et directement que de deux dimensions qui sont celle de la paroi de positionnement et celle de la fente. De plus, la mise en œuvre de la fente peut être réalisée de manière économique par le simple passage d'un outil d'usinage, et réduit ainsi significativement la quantité de manière à usiner dans le logement.

Selon une caractéristique supplémentaire de l'invention, le logement est formé de matière dans le carter de transmission.

Selon une caractéristique supplémentaire de l'invention, la fente est réalisée par une seule opération d'usinage en utilisant un outil de coupe destiné à usiner les rainures, tels que notamment une fraise-disque, une fraise en bout ou un outil de rainurage.

Selon une caractéristique supplémentaire de l'invention, le dispositif de poussée se présente sous la forme d'un chariot mobile comportant un premier galet mobile apte à se déplacer le long de la paroi de guidage du rail de guidage et un deuxième galet mobile apte à se déplacer sur la surface de came du cliquet mobile.

Grâce à ces caractéristiques, lorsque le chariot mobile est en mouvement relatif par rapport au rail de guidage, les forces de frottement entre le chariot mobile et le rail de guidage sont diminuées. Ainsi le déplacement du chariot mobile est assuré sans usure du chariot mobile ou du rail de guidage.

Selon une caractéristique supplémentaire de l'invention, le dispositif de poussée est sous la forme d'un embout monobloc par exemple d'extrémité arrondie ou conique, l'embout monobloc étant apte à se déplacer d'une part sur la paroi de guidage du rail de guidage et d'autre part sur la surface de came du cliquet mobile.

Grâce à cette caractéristique, la fonction du dispositif de poussée est réalisée avec un faible nombre de composants et donc un coût réduit.

Selon une caractéristique supplémentaire de l'invention, la paroi de positionnement et la paroi de guidage forment une paroi unique, la paroi de positionnement comportant au moins une excroissance s'étendant sensiblement suivant une direction parallèle au déplacement du dispositif de poussée, l'au moins une excroissance étant en vis-à-vis de la première face de positionnement et/ou de la deuxième face de positionnement du logement.

Selon une caractéristique supplémentaire de l'invention, la paroi de positionnement et la paroi de guidage forment une paroi unique, la paroi de positionnement comportant au moins deux excroissances s'étendant sensiblement suivant une direction parallèle au déplacement du dispositif de poussée à partir de la paroi de guidage, les au moins deux excroissances étant en vis-à-vis de la première face de positionnement et/ou de la deuxième face de positionnement du logement.

Cette caractéristique permet plusieurs avantages :
- la paroi unique confère au rail de guidage une forme simple à fabriquer, sans pliage ou zone de raccord de géométrie complexe entre la paroi de guidage et les faces de positionnement ;
- la paroi de guidage est maintenue directement par la fente du logement, permettant ainsi un positionnement précis du dispositif de poussée par rapport au cliquet afin, d'une part, de garantir la fiabilité du blocage et, d'autre part, éviter que des efforts trop importants transitent par le mécanisme de blocage et ne soient ainsi susceptibles de l'endommager.

Les excroissances de la paroi de positionnement sont de préférence de plus petites dimensions comparées à celles de la paroi de guidage, par exemple la plus grande surface d'une excroissance de la paroi de positionnement est 10% à 30% plus petite que la plus grande surface de la paroi de guidage. Ces excroissances de petites dimensions permettent d'obtenir lors de la fabrication du rail de guidage une réduction des défauts de positionnement et de planéité de la paroi de positionnement. Ces excroissances de petites dimensions permettent également de limiter le risque de coincement du rail de guidage lors de son assemblage dans la fente de positionnement du logement.

Selon une caractéristique supplémentaire de l'invention, la première face de positionnement du logement et la deuxième face de positionnement du logement sont parallèles.

Grâce à cette caractéristique, la surface d'appui entre la fente de positionnement du logement et la paroi de positionnement du rail de guidage est augmentée pour permettre une reprise suffisante des efforts transitant dans le mécanisme de blocage.

Selon une caractéristique supplémentaire de l'invention, une largeur de la fente de positionnement, une épaisseur de la paroi de positionnement et un jeu de fonctionnement étant égal à la différence entre la largeur et l'épaisseur sont définis, la valeur du jeu de fonctionnement étant compris entre 0,05 et 1 mm, la valeur du jeu de fonctionnement étant compris de préférence entre 0,2 et 0,6 mm.

Grâce aux caractéristiques de l'invention, la facilité de mise en œuvre est améliorée car elle dépend directement de la tolérance de fabrication d'usinage de la fente et de la tolérance d'épaisseur de la paroi de guidage. De ce fait, la tolérance de la valeur du jeu de fonctionnement s'avère réduite, ce qui augmente la précision du positionnement du rail de guidage.

Dans le cas où la première face de positionnement du logement et la deuxième face de positionnement du logement ne sont pas parallèles, la largeur de la fente s'entend comme la plus petite distance existante entre la première face de positionnement du logement et la deuxième face de positionnement du logement.

Selon une caractéristique supplémentaire de l'invention, le logement présente une première face latérale en vis-à-vis et distante d'une deuxième face latérale et une première face longitudinale située entre la première face latérale et la deuxième face latérale, dans lequel le rail de guidage présente de manière correspondante au logement une troisième face latérale en vis-à-vis et distante d'une quatrième face latérale et la paroi de guidage s'étendant longitudinalement entre la troisième face latérale et la quatrième face latérale, et dans lequel la troisième face latérale, la quatrième face latérale et la paroi de guidage du rail de guidage sont respectivement en vis-à-vis de la première face latérale, la deuxième face latérale et la première face longitudinale du logement afin de limiter un déplacement du rail de guidage dans toutes les directions du plan.

Cette disposition est particulièrement avantageuse car les différents efforts de pressions exercés sur le rail de guidage sont repris par les faces du logement et donc par le carter de transmission. Cet agencement permet de conserver les dimensions du rail de guidage, en réduisant sa déformation et donc sa détérioration au cours du temps.

Cette caractéristique permet en outre l'assemblage et le positionnement du rail de guidage dans le logement du carter de manière simple et économique. Les faces du logement peuvent être obtenues par exemple par usinage. La troisième face latérale et la quatrième face latérale du rail de guidage peuvent être obtenues par exemple chacune par une opération de pliage à partir d'une tôle métallique.

Selon une caractéristique supplémentaire de l'invention, un jeu d'assemblage est formé entre la première face latérale et la troisième face latérale, entre la deuxième face latérale et la quatrième face latérale et entre la première face longitudinale et la paroi de guidage, ledit jeu d'assemblage valant de préférence entre 0,2 et 1 mm.

Cette caractéristique permet de choisir un jeu d'assemblage étant d'une part suffisamment petit pour limiter le déplacement du rail de guidage dans le logement, et d'autre part étant suffisamment grand pour permettre l'insertion sans effort du rail de guidage dans le logement pendant l'opération d'assemblage

Selon une caractéristique supplémentaire de l'invention, le rail de guidage est monté serré dans le logement par une liaison d'emboîtement

Selon une caractéristique supplémentaire de l'invention, le rail de guidage est monté serré dans le logement par l'interposition d'une pièce élastique précontrainte entre le rail de guidage et le logement.

Selon une caractéristique supplémentaire de l'invention, le rail de guidage comporte deux pattes pliées à un angle de 90 degrés par rapport à la paroi de guidage, chaque patte pliée formant une paroi latérale qui supporte l'une des deux faces latérales du rail de guidage.

Selon une caractéristique supplémentaire de l'invention, le rail de guidage comporte une unique patte pliée à un angle de 90 degrés par rapport à la paroi de guidage, la patte pliée formant une paroi latérale qui supporte la troisième face latérale du rail de guidage, une tranche de découpe de l'épaisseur de la paroi de guidage formant la quatrième face latérale du rail de guidage.

Selon une caractéristique supplémentaire de l'invention, une première tranche de découpe de l'épaisseur de la paroi de guidage forme la troisième face latérale du rail de guidage, une deuxième tranche de découpe de l'épaisseur de la paroi de guidage forme la quatrième face latérale du rail de guidage.

Selon une caractéristique supplémentaire de l'invention, le rail de guidage est plat, une première tranche de découpe de l'épaisseur de la paroi de guidage formant la troisième face latérale du rail de guidage, une deuxième tranche de découpe de l'épaisseur de la paroi de guidage formant la quatrième face latérale du rail de guidage.

Selon une caractéristique supplémentaire de l'invention, le rail de guidage comporte exclusivement la paroi de guidage, une première paroi latérale et/ou une deuxième paroi latérale.

Cette dernière caractéristique implique que le rail de guidage ne comporte pas un fond ou un plafond.

Selon une caractéristique supplémentaire de l'invention, la paroi de guidage, la première paroi latérale et/ou la deuxième paroi latérale du rail de guidage présente une épaisseur comprise entre 1.5mm et 3.5mm; de préférence entre 2.5 et 3mm.

Selon une caractéristique supplémentaire de l'invention, toutes les parois du rail de guidage sont perpendiculaires au plan.

Selon une caractéristique supplémentaire de l'invention, le logement est usiné dans des dimensions choisies de manière à positionner le rail de guidage et à limiter un déplacement dudit rail de guidage selon toutes les directions du plan.

Selon une caractéristique supplémentaire de l'invention, le logement présente une hauteur comprise entre 15 mm et 30 mm.

Selon une caractéristique supplémentaire de l'invention, les parois du logement portant la première face longitudinale, la première face latérale et la deuxième face latérale présentent une épaisseur comprise entre 3 et 10 mm.

Selon une caractéristique supplémentaire de l'invention, les parois du logement portant la première face longitudinale, la première face latérale et la deuxième face latérale peuvent présenter des raidisseurs orientés perpendiculairement à la première face longitudinale et/ou à la première face latérale et/ou à la deuxième face latérale, les raidisseurs étant par exemple de formes triangulaires,

Cette caractéristique permet d'augmenter la résistance du logement sous les efforts transitant dans le mécanisme de blocage.

Selon une caractéristique supplémentaire de l'invention, le carter est fabriqué par un processus de fonderie, notamment de fonderie d'aluminium ou de magnésium.

Selon une caractéristique supplémentaire de l'invention, la première face latérale du logement et/ou la deuxième face latérale du logement ne possèdent pas de bord commun avec la première surface longitudinale du logement, la première face latérale du logement, la deuxième face latérale du logement et la première surface longitudinale du logement étant obtenues par un processus d'usinage et reliées entre-elles par des parois de matière brute.

Cette caractéristique permet de réduire la quantité de matière à usiner. La matière brute s'entend dans l'invention par la matière dépourvue d'usinage. Par exemple, la matière brute peut provenir d'un processus de fonderie. Avantageusement, la distance minimale dans la direction longitudinale entre la première surface longitudinale du logement et la première face latérale du logement et/ou entre la première surface longitudinale du logement et la deuxième face latérale du logement peut être supérieure ou égale au rayon de l'outil de fraisage utilisé pour le processus d'usinage.

Selon une caractéristique supplémentaire de l'invention, les parois du rail de guidage et/ou les parois du logement peuvent comporter des chanfreins ou des rayonnages pour faciliter, pendant l'opération d'assemblage, l'insertion du rail de guidage dans le logement suivant la direction perpendiculaire au plan

Selon une caractéristique supplémentaire de l'invention, le logement présente une hauteur comprise entre 15 mm et 30 mm.

Selon une caractéristique supplémentaire de l'invention, le logement présente une première encoche et le rail de guidage présente une deuxième encoche, la première encoche du logement et la deuxième encoche du rail de guidage étant traversantes et étant destinées à permettre le passage de l'actionneur.

Selon une caractéristique supplémentaire de l'invention, la forme de la première encoche et/ou de la deuxième encoche est choisie parmi : un évidement, une découpe, un trou oblong, une rainure ou une fente.

Selon une caractéristique supplémentaire de l'invention, la première encoche du logement est située sur la première face latérale du logement et la deuxième encoche du rail de guidage est située sur la troisième face latérale du rail de guidage.

Selon une caractéristique supplémentaire de l'invention, le rail de guidage comprend une butée anti-retour et/ou une butée de fin de course empêchant le déplacement du dispositif de poussée au-delà dudit rail de guidage.

Grâce à ces caractéristiques, le dispositif de poussée est maintenu dans le logement.

Selon une caractéristique supplémentaire de l'invention, la butée anti-retour est réalisée par la troisième face latérale du rail de guidage et/ou la butée de fin de course est réalisée par la quatrième face latérale du rail de guidage.

Selon une caractéristique supplémentaire de l'invention, la fente de positionnement du logement comporte en outre au moins une face de fond parallèle au plan et, de manière correspondante, la paroi de positionnement du rail de guidage comporte en outre au moins une face inférieure parallèle au plan, l'au moins une face inférieure étant en vis-à-vis de l'au moins une face de fond de façon à limiter le déplacement du rail de guidage dans une direction perpendiculaire au plan.

Selon une caractéristique supplémentaire de l'invention, un moyen de fixation fixe le rail de guidage sur le carter de transmission, le moyen de fixation bloquant un mouvement du rail de guidage selon une direction perpendiculaire au plan.

Selon une caractéristique supplémentaire de l'invention, le moyen de fixation est par exemple : une vis, un système vis écrou, un rivet, une matière adhésive, une butée rapportée sur le logement ou une butée obtenue par déformation plastique du logement.

Selon une caractéristique supplémentaire de l'invention, le rail de guidage est formé d'un seul tenant dans une bande de matériau métallique pliée, notamment dans une tôle d'acier.

Selon une caractéristique supplémentaire de l'invention, le rail de guidage est formé d'un seul tenant par un processus de frittage d'un matériau métallique.

Selon une caractéristique supplémentaire de l'invention, le rail de guidage est formé d'un seul tenant par un processus de moulage d'un matériau métallique.

Selon une caractéristique supplémentaire de l'invention, le rail de guidage est fabriqué dans un métal ayant subi un traitement de durcissement, notamment une carbonitruration, une nitruration, une cémentation ou une trempe.

Cette caractéristique permet d'augmenter la résistance mécanique du rail de guidage nécessaire pour résister aux sollicitations transmises au mécanisme de blocage.

L'invention concerne également un système de transmission comprenant un arbre équipé d'au moins un évidement de verrouillage et un mécanisme de blocage tel que défini précédemment.

Selon une caractéristique supplémentaire de l'invention, l'arbre comprend une roue comportant l'au moins un évidement de verrouillage. Par exemple, la roue est une roue à rochet.

Selon une caractéristique supplémentaire de l'invention, la roue comporte 1 à 12 évidements de verrouillage.

Selon une caractéristique supplémentaire de l'invention, les évidements sont régulièrement espacés les uns des autres.

L'invention concerne en outre un véhicule automobile comprenant un système de transmission tel que défini précédemment.

### Brève description des figures

FIG 1 La figure 1 est une vue de face d'une portion d'un carter de transmission comprenant un logement pour le rail de guidage selon un premier mode de réalisation.
FIG 2 La figure 2 est une vue en perspective du logement de la figure 1.
FIG 3 La figure 3 est une vue de face d'une portion d'un carter de transmission comprenant un logement et un rail de guidage selon un premier mode de réalisation.
FIG 4 La figure 4 est une vue en perspective de la portion de carter et du rail de guidage de la figure 3.
FIG 5 La figure 5 est une première vue en perspective du rail de guidage illustré sur les figures 3 et 4.
FIG 6 La figure 6 est une deuxième vue en perspective du rail de guidage illustré sur les figures 3 et 4.
FIG 7 La figure 7 est une vue schématique de côté de la portion de carter et du rail de guidage de la figure 4.
FIG 8 La figure 8 est une vue de face d'une portion du mécanisme de blocage selon un premier mode de réalisation.
FIG 9 La figure 9 est une vue en perspective du mécanisme de blocage de la figure 8.
FIG 10 La figure 10 est une vue en perspective d'un logement selon un deuxième mode de réalisation.
FIG 11 La figure 11 est une vue en perspective comprenant le rail de guidage inséré dans le logement de la figure 10.
FIG 12 La figure 12 est une vue en perspective d'un arbre d'un véhicule bloqué en rotation.

### Description des modes de réalisation

Un mécanisme de blocage en rotation d'un arbre d'un véhicule comprend notamment : un cliquet mobile, un actionneur, un dispositif de poussée, un rail de guidage et un carter comprenant un logement. Le mécanisme de blocage est notamment destiné à immobiliser un véhicule, par exemple une voiture, dans un état stationné.

Les différents éléments du mécanisme de blocage selon différentes variantes de réalisation seront présentés ci-dessous.

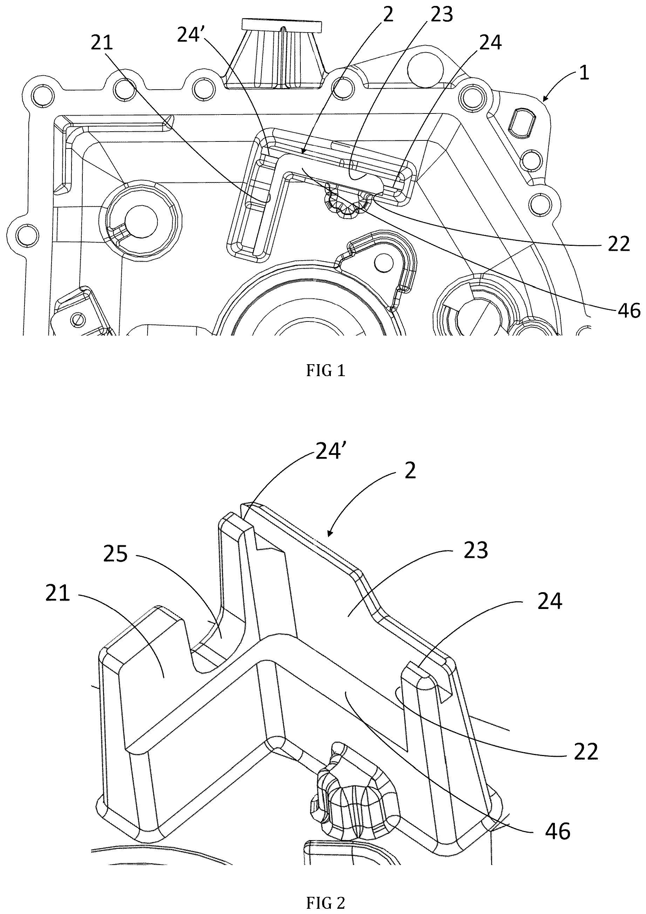

Les figures 1 et 2 illustrent un carter de transmission 1 (partiellement représenté) comprenant un logement 2 du mécanisme de blocage d'un véhicule selon un premier mode de réalisation.

Le logement 2 est par exemple formé dans le carter de transmission 1, c'est-à-dire que le logement n'est pas une pièce détachée qui est fixée sur le carter de transmission 1. En effet, le logement 2 peut être creusé ou fabriqué directement, par exemple par un processus de fonderie, dans l'épaisseur d'une paroi du carter de transmission 1.

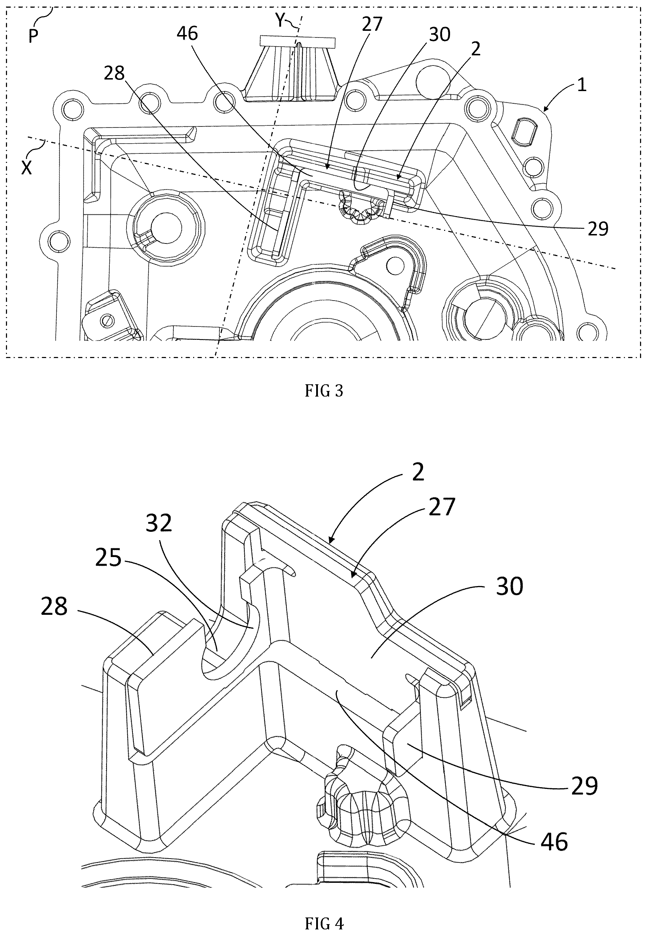

Le logement 2 est destiné à loger et positionner un rail de guidage, illustré notamment sur les figures 3, 4 et 5.Le logement 2 présente par exemple une forme générale en « L » avec des arrêtes arrondies

Le logement 2 comprend une première face latérale 21 en vis-à-vis et distante d'une deuxième face latérale 22. Le logement 2 comporte en outre longitudinalement une première face de positionnement 23 en vis-vis de deux deuxièmes faces de positionnement 24 et 24'. Les deux deuxièmes faces de positionnement 24 et 24' peuvent être dans un même plan et peuvent être parallèles à la première face de positionnement 23 pour former une fente de positionnement.

Les figures 3 et 4 illustrent une portion d'un carter de transmission 1 comprenant le logement 2 tel que présenté dans les figures 1 et 2 et illustre en outre un rail de guidage 27 logé dans le logement 2.

Le rail de guidage 27 présente des dimensions similaires au logement 2 afin d'être inséré dans le logement 2, c'est-à-dire que le rail de guidage 27 épouse le contour du logement 2. Ainsi le rail de guidage est maintenu en position statique dans le logement 2 dans un plan P comprenant une direction longitudinale X et une direction transversale Y perpendiculaire à la direction longitudinale X. Dans cette disposition, les différents efforts de pressions exercés sur le rail de guidage 27 peuvent être repris par les faces du logement 2 et donc par le carter de transmission 1.

Comme illustré notamment sur les figures 4, 5 et 6, le rail de guidage 27 peut comporter une paroi de positionnement comprenant deux excroissances 300 et 300' en vis-à-vis de la première face de positionnement 23 d'une part et des deux deuxièmes faces de positionnement 24 et 24' d'autre part, pour venir s'insérer dans la fente de positionnement du logement 2 et ainsi positionner le rail de guidage suivant la direction transversale Y.

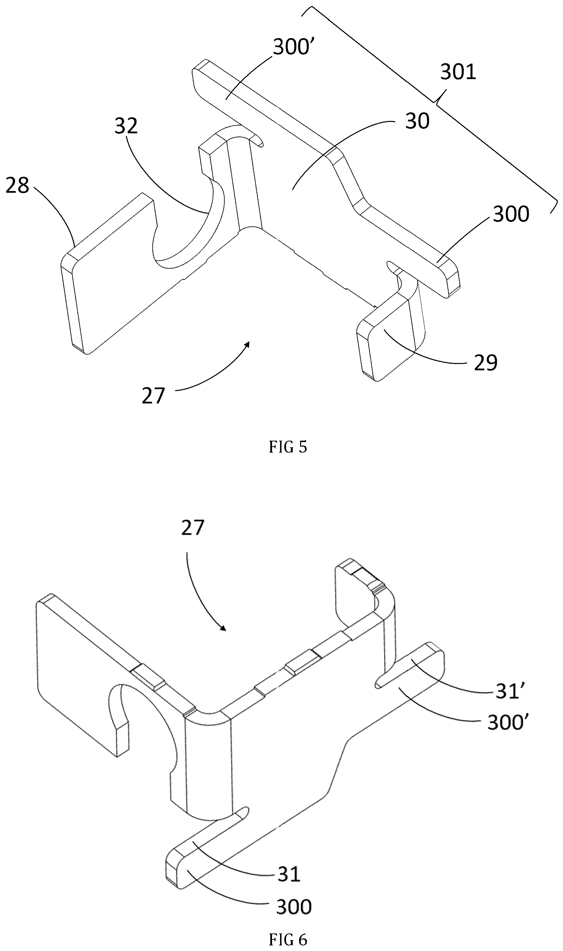

De manière analogue au logement 2 tel qu'illustré sur les figures 1 et 2, le rail de guidage 27 illustré en figures 5 et 6 peut présenter une troisième face latérale 28 en vis-à-vis et distante d'une quatrième face latérale 29 ainsi qu'une paroi de guidage 30 s'étendant longitudinalement entre la troisième face latérale 28 et la quatrième face latérale 29.

La troisième face latérale 28, la quatrième face latérale 29 et la paroi de guidage 30 du rail de guidage 27 peuvent être respectivement en vis-à-vis de la première face latérale 21, la deuxième face latérale 22 et la première face longitudinale 23 du logement 2 afin d'empêcher un déplacement du rail de guidage 27 dans toutes les directions du plan P.

Les deux excroissances 300 et 300' peuvent s'étendre longitudinalement et former avec la paroi de guidage 30 une paroi unique 301. La paroi unique 301 peut être plane.

Comme illustré par les figures 2, 4, 6 et 7, la fente de positionnement du logement 2 peut comporter deux faces de fond 47, 47' parallèles au plan P et, de manière correspondante, les deux excroissances 300 et 300' du rail de guidage 27 peuvent comporter deux faces inférieures 31, 31' parallèles au plan P, les deux faces inférieures 31, 31' étant en vis-à-vis des deux faces de fond 47, 47' de façon à limiter le déplacement du rail de guidage dans une direction perpendiculaire au plan P.

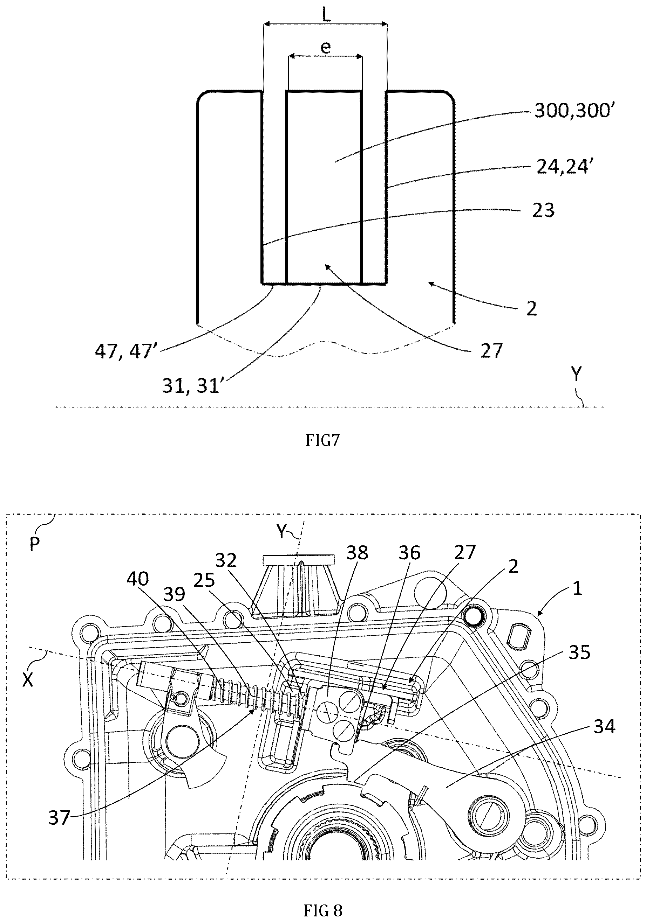

Comme illustré schématiquement sur la figure 7, un jeu de fonctionnement égal à la différence entre la largeur L de la fente de positionnement et l'épaisseur e de la paroi de positionnement 300 est définie. La valeur du jeu de fonctionnement peut être de l'ordre de 0,2 à 0,6 mm.

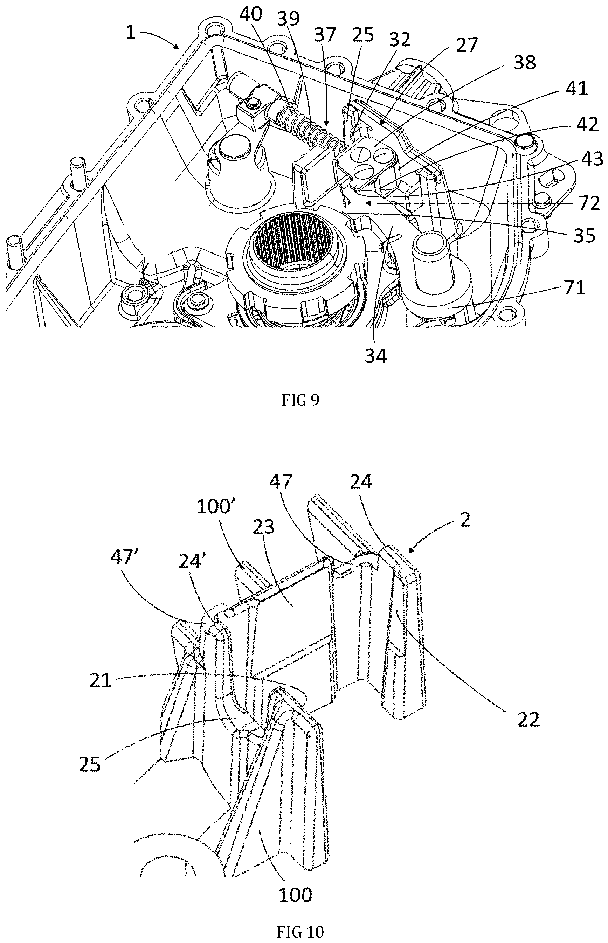

En outre, la première face latérale 21 du logement 2 peut comprendre une première encoche 25 destinée à permettre le passage d'un actionneur qui est illustré sur les figures 8 et 9. La première encoche 25 présente par exemple une forme de « U ».

La troisième face latérale 28 du rail de guidage 27 peut comprendre une deuxième encoche 32 ayant une forme correspondant à celle de la première encoche 25 du logement 2, comme illustrée sur la figure 4. La deuxième encoche 32 est destinée par exemple à permettre le passage d'un actionneur 37 qui est présenté sur les figures 8 et 9.

La troisième face latérale 28 du rail de guidage 27 peut être une butée anti-retour pour le dispositif de poussée 38, illustré par les figures 8 et 9, afin que le dispositif de poussée soit retenu en translation suivant l'axe X dans le logement 2, par le rail de guidage 27.

Le rail de guidage 27 sert au guidage du dispositif de poussée 38 et peut prévoir qu'il n'effectue que le mouvement de translation nécessaire à l'actionnement d'un doigt de verrouillage dans un évidement de verrouillage afin que le mécanisme de blocage soit dans une position de verrouillage. La position de verrouillage permet par exemple le stationnement d'un véhicule automobile.

Le rail de guidage peut être fabriqué par exemple à partir d'une bande de matériau métallique qui est d'une part découpée afin de former la deuxième encoche 32 puis pliée deux fois dans le sens de la longueur afin de former lesdites parois qui le composent. La bande métallique avant pliage peut comprendre également une encoche destinée à former la deuxième encoche 32 du rail de guidage. L'épaisseur de la bande métallique est par exemple de l'ordre de 3 mm.

Les figures 8 et 9 représentent des vues partielles d'un mécanisme de blocage en rotation d'un arbre dans une position libérée.

Le mécanisme de blocage comprend le logement 2 tel que représenté sur les figures 1 à 4 et le rail de guidage 27 tel que représenté sur les figures 3 à 6. Le mécanisme de blocage peut comprendre en outre un cliquet mobile 34 situé dans le carter de transmission 1.

Le cliquet mobile 34 peut être de forme allongée et peut présenter une première extrémité 71 et une deuxième extrémité 72 distante de la première extrémité 71.

La première extrémité 71 permet par exemple la fixation du cliquet mobile 34 sur le carter de transmission 1 tout en permettant le mouvement en rotation dudit cliquet mobile 34. C'est-à-dire que le cliquet mobile est monté pivotant dans un plan P autour d'un axe de pivotement.

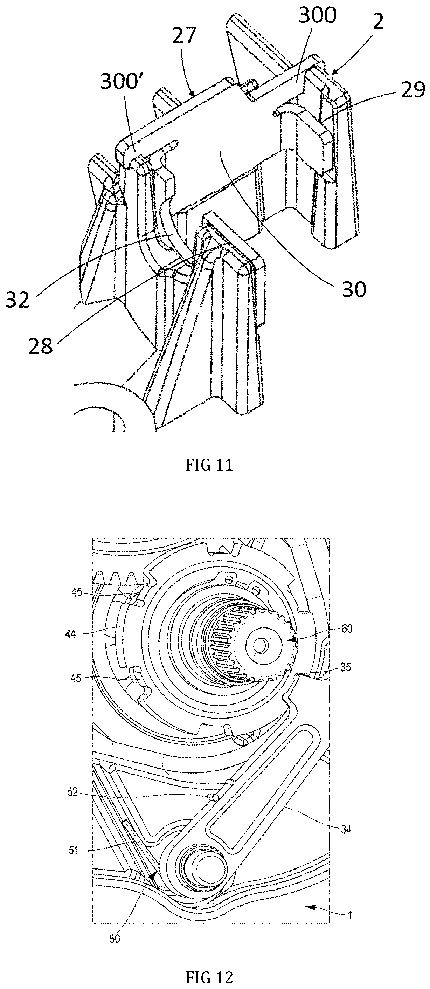

La deuxième extrémité 72 peut être située au niveau de l'ouverture 33 du rail de guidage 27 et de l'ouverture 26 du logement. La deuxième extrémité 72 peut comprendre une surface de came 36 située sur une cinquième face latérale du cliquet mobile 34, en direction de l'intérieur du logement 2. La deuxième extrémité 72 peut comprendre en outre un doigt de verrouillage 35 faisant sailli vers l'extérieur du logement 2 depuis une sixième face latérale du cliquet mobile 34. Le doigt de verrouillage 35 est destiné, lorsque le mécanisme de blocage est enclenché, à s'insérer dans un évidement de verrouillage 45, représenté sur la figure 12. L'évidement de verrouillage 45 est par exemple situé sur une roue à rochet 44 qui est apte à recevoir ledit doigt de verrouillage 35, comme illustré sur la figure 12 et qui est fixée solidaire en rotation de l'arbre 60 de transmission à bloquer en rotation.

Selon une variante présentée sur la figure 12, le cliquet mobile 34 peut comprendre en outre un ressort de torsion 50. Le ressort de torsion 50 est par exemple enroulé au niveau de la première extrémité 71 du cliquet mobile 34. Le ressort de torsion 50 peut comprendre une première portion d'extrémité 51 qui est en appui contre une surface d'appui du carter de transmission et une deuxième portion d'extrémité 52 qui est en appui contre une surface d'appui du cliquet mobile 34. Le ressort de torsion 50 est agencé pour exercer un effort de rappel sur le cliquet mobile 34 afin de le rappeler vers la position libérée. Le mécanisme de blocage peut comprendre en outre un actionneur 37, représenté partiellement sur la figure 7, qui est fixé au carter de transmission 1. L'actionneur 37 peut comprendre une tige 39 apte à se déplacer selon la direction longitudinale X.

La tige 39 peut se développer à travers la première encoche 25 du logement 2 et la deuxième encoche 32 du rail de guidage 27 jusque dans un espace interne du logement 2. La tige 39 peut être fixée au dispositif de poussée 38 situé dans le logement 2.

Le dispositif de poussée 38 est destiné à être guidé par le rail de guidage 27.

Dans les cas où le dispositif de poussée 38 est renvoyé en arrière par le cliquet mobile 34 lors de phases dynamiques, le dispositif de poussée 38 peut venir en butée contre la troisième face latérale 28 du rail de guidage 27, qui forme ainsi une butée anti-retour pour le dispositif de poussée 38. Le dispositif de poussée 38, est dans ce cas envoyé contre le cliquet mobile 34 par une force de rappel exercée par un ressort de traction 40 qui entoure la tige 39 et qui comporte une première extrémité fixée au corps de l'actionneur et une deuxième extrémité fixée au dispositif de poussée 38. Cet effet peut se produire par exemple lors de tentatives d'engagement à trop haute vitesse. Au-delà d'une vitesse seuil, par exemple comprise entre 3km/h et 5km/h, le cliquet mobile 34 rebondit pour empêcher l'engagement, le dispositif de poussée 38 est alors renvoyé en butée.

Dans le mode de réalisation des figures 8 et 9, le dispositif de poussée 38 peut se présenter sous la forme d'un chariot mobile qui comprend par exemple un premier galet mobile 41 apte à se déplacer le long de la première paroi longitudinale 30 du rail de guidage 27. Le dispositif de poussée 38 peut comprendre en outre un suiveur de came 42 comportant un deuxième galet mobile qui est en contact avec la surface de came 36 du cliquet mobile 34 et apte à se déplacer le long de cette surface de came 36.

Le dispositif de poussée 38 peut comprendre en outre un ergot 43 situé au niveau de la deuxième extrémité du cliquet mobile 34. L'ergot 43 est destiné à retenir le cliquet mobile 34 dans le plan P.

Pour déplacer le cliquet mobile 34 dans la position de verrouillage, la tige 39 de l'actionneur 37 peut être déplacée à travers la deuxième encoche 32 du rail de guidage 27 déplaçant ainsi le dispositif de poussée 38 selon une direction longitudinale. Le dispositif de poussée 38 peut être déplacé depuis la troisième face latérale 28 du rail de guidage 27, en direction de la quatrième face latérale 29 du rail de guidage 27. Le déplacement du dispositif de poussée 38 peut entraîner le déplacement du premier galet mobile 41 le long de la première paroi longitudinale 30 du rail de guidage 27 et le déplacement du suiveur de came 42 le long de la surface de came 36 du cliquet mobile 34. La surface de came 36 peut présenter une pente et le dispositif de poussée 38 peut exercer donc via son déplacement, une pression en direction de la surface de came 36 du cliquet mobile 34. Cette pression peut engendrer un déplacement en rotation de la deuxième extrémité du cliquet mobile 34 en direction d'un évidement de verrouillage de telle sorte que le doigt de verrouillage 35 peut s'engager dans un évidement de verrouillage présent par exemple sur une roue à rochet telle qu'illustrée figure 12 afin de verrouiller ladite roue à rochet 44.

La figure 12 illustre un carter de transmission 1 comprenant une roue à rochet 44. La roue à rochet 44 peut présenter une pluralité d'évidements 45 régulièrement espacés les uns des autres, sur tout le tour de la roue à rochet 44. Chaque évidement 45 de la pluralité d'évidements peut présenter des dimensions permettant de recevoir le doigt de verrouillage 35 du cliquet mobile 34. La figure 12 illustre en outre un arbre 60 d'un véhicule qui est bloqué en rotation par le mécanisme de blocage.

Pour le déplacement du mécanisme de blocage de la position de verrouillage à la position libérée, la tige 39 peut être déplacée de manière à déplacer le dispositif de poussée 38 en direction de la troisième face latérale 28 jusqu'à ce qu'il vienne en butée contre la troisième face latérale 28 du rail de guidage 27. Le doigt de verrouillage 35 peut être dégagé de l'évidement de verrouillage présent sur la roue à rochet 44 ce qui libère ladite roue à rochet et autorise ainsi la rotation de l'arbre 60 de transmission.

Les figures 10 à 11 illustrent un deuxième mode de réalisation du logement 2 dans lequel vient s'insérer le rail de guidage 27. Dans ce mode de réalisation, le processus de fabrication a été amélioré par rapport au premier mode de réalisation du logement 2 de la figure 2 afin de réduire la quantité de matière à enlever pour fabriquer le logement. La première face latérale 21 du logement et la deuxième face latérale 22 du logement ne possèdent pas de bord commun avec la première surface longitudinale 23 du logement, la première face latérale 21 du logement, la deuxième face latérale 22 du logement et la première surface longitudinale 23 du logement étant par exemple obtenues par un processus d'usinage et reliées entre-elles par des parois de matière brute de fonderie.

Dans le mode de réalisation de la figure 10, les différentes parois issues du carter qui portent les faces du logement peuvent être d'épaisseur peu différentes, variant par exemple de 4 à 6 mm, afin de favoriser la moulabilité au cours du processus de fonderie. Ces parois peuvent comporter des raidisseurs (100, 100') orientés perpendiculairement à la première face longitudinale 23 et/ou à la première face latérale 21 et/ou à la deuxième face latérale 22, les raidisseurs étant par exemple de formes triangulaires.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Mécanisme de blocage apte à bloquer en rotation un arbre d'un véhicule équipé d'au moins un évidement de verrouillage (45), le mécanisme de blocage comprenant :
- un carter de transmission (1) comportant un logement (2), le logement (2) comportant une première face de positionnement (23) et une deuxième face de positionnement (24, 24'), la première face de positionnement (23) et la deuxième face de positionnement (24, 24') formant une fente de positionnement ;
- un cliquet mobile (34) comprenant un doigt de verrouillage (35), le cliquet mobile (34) étant monté pivotant dans un plan (P) autour d'un axe de pivotement sur le carter de transmission (1) entre une position de verrouillage dans laquelle le doigt de verrouillage (35) est engagé dans l'évidement de verrouillage (45) et une position libérée dans laquelle le doigt de verrouillage (35) est désengagé dudit évidement de verrouillage (45), le cliquet mobile (34) comprenant une surface de came (36) ;
- un actionneur (37) qui déplace un dispositif de poussée (38), le dispositif de poussée (38) comportant un suiveur de came apte à se déplacer sur la surface de came (36) afin de déplacer le cliquet mobile de la position libérée vers la position de verrouillage ;
- un rail de guidage (27) comportant une paroi de guidage (30) guidant le déplacement du dispositif de poussée (38) et une paroi de positionnement (300) ;
la paroi de positionnement (300) du rail de guidage (27) étant insérée dans la fente de positionnement du logement (2).

2. Mécanisme de blocage selon la revendication 1 dans lequel la paroi de positionnement (300) et la paroi de guidage (30) forment une paroi unique (301), la paroi de positionnement (300) comportant au moins une excroissance (300, 300') s'étendant sensiblement suivant une direction parallèle au déplacement du dispositif de poussée (38) à partir de la paroi de guidage (30), l'au moins une excroissance (300, 300') étant en vis-à-vis de la première face de positionnement (23) et/ou de la deuxième face de positionnement (24, 24') du logement (2).

3. Mécanisme de blocage selon la revendication 2, la paroi de positionnement (300) comportant au moins deux excroissances (300, 300') s'étendant sensiblement suivant une direction parallèle au déplacement du dispositif de poussée (38), les au moins deux excroissances (300, 300') étant en vis-à-vis de la première face de positionnement (23) et/ou de la deuxième face de positionnement (24, 24') du logement (2).

4. Mécanisme de blocage selon l'une quelconque des revendications précédentes dans lequel la première face de positionnement (23) du logement (2) et la deuxième face de positionnement (24, 24') du logement (2) sont parallèles.

5. Mécanisme de blocage selon l'une quelconque des revendications précédentes dans lequel sont définis une largeur (L) de la fente de positionnement, une épaisseur (e) de la paroi de positionnement (300), et un jeu de fonctionnement étant égal à la différence entre la largeur (L) et l'épaisseur (e), la valeur du jeu de fonctionnement étant compris entre 0,05 et 1 mm, la valeur du jeu de fonctionnement étant compris de préférence entre 0,2 et 0,6 mm.

6. Mécanisme de blocage selon l'une quelconque des revendications précédentes dans lequel le logement (2) présente une première face latérale (21) en vis-à-vis et distante d'une deuxième face latérale (22) et une première face longitudinale (23) située entre la première face latérale (21) et la deuxième face latérale (22), dans lequel le rail de guidage (27) présente de manière correspondante au logement (2) une troisième face latérale (28) en vis-à-vis et distante d'une quatrième face latérale (29) et la paroi de guidage (30) s'étendant longitudinalement entre la troisième face latérale (28) et la quatrième face latérale (29),
et dans lequel la troisième face latérale (28), la quatrième face latérale (29) et la paroi de guidage (30) du rail de guidage (27) sont respectivement en vis-à-vis de la première face latérale (21), la deuxième face latérale (22) et la première face longitudinale (23) du logement (2) afin de limiter un déplacement du rail de guidage (27) dans toutes les directions du plan (P).

7. Mécanisme de blocage selon la revendication 6 dans lequel la première face latérale (21) du logement et/ou la deuxième face latérale (22) du logement ne possèdent pas de bord commun avec la première surface longitudinale (23) du logement, la première face latérale (21) du logement, la deuxième face latérale (22) du logement et la première surface longitudinale (23) du logement étant obtenues par un processus d'usinage et reliées entre-elles par des parois de matière brute.

8. Mécanisme de blocage selon l'une quelconque des revendications précédentes dans lequel le logement présente une première encoche (25) et, dans lequel le rail de guidage (27) présente une deuxième encoche (32), la première encoche (25) du logement et la deuxième encoche (32) du rail de guidage étant traversantes et étant destinées à permettre le passage de l'actionneur (37).

9. Mécanisme de blocage selon l'une quelconque des revendications précédentes dans lequel le rail de guidage (27) comprend une butée anti-retour (28) et/ou une butée de fin de course (29) empêchant le déplacement du dispositif de poussée (38) au-delà dudit rail de guidage (27).

10. Mécanisme de blocage selon la revendication 9, dans lequel la butée anti-retour est réalisée par la troisième face latérale (28) du rail de guidage (27) et/ou la butée de fin de course est réalisée par la quatrième face latérale (29) du rail de guidage (27).

11. Mécanisme de blocage selon l'une quelconque des revendications précédentes dans lequel la fente de positionnement du logement (2) comporte en outre au moins une face de fond (47, 47') parallèle au plan (P), et de manière correspondante, la paroi de positionnement (300) du rail de guidage (27) comporte en outre au moins une face inférieure (31, 31') parallèle au plan P, l'au moins une face inférieure (31, 31') étant en vis-à-vis de l'au moins une face de fond (47, 47') de façon à limiter le déplacement du rail de guidage (27) dans une direction perpendiculaire au plan (P).

12. Mécanisme de blocage selon l'une quelconque des revendications précédentes, dans lequel un moyen de fixation fixe le rail de guidage (27) sur le carter de transmission (1), le moyen de fixation bloquant un mouvement du rail de guidage selon une direction perpendiculaire au plan (P).

13. Mécanisme de blocage selon l'une quelconque des revendications précédentes dans lequel le rail de guidage (27) est formé d'un seul tenant dans une bande de matériau métallique pliée, notamment dans une tôle d'acier.

14. Système de transmission comprenant un arbre équipé d'au moins un évidement de verrouillage (45) et un mécanisme de blocage selon l'une quelconque des revendications 1 à 13.

## Patentansprüche

1. Blockiermechanismus, der geeignet ist, eine Welle eines Fahrzeugs, die mit mindestens einer Verriegelungsaussparung (45) ausgestattet ist, in Rotation zu blockieren, wobei der Blockiermechanismus umfasst:
- ein Getriebegehäuse (1) mit einer Aufnahme (2), wobei die Aufnahme (2) eine erste Positionierungsfläche (23) und eine zweite Positionierungsfläche (24, 24') aufweist, wobei die erste Positionierungsfläche (23) und die zweite Positionierungsfläche (24, 24') einen Positionierungsschlitz bilden;
- eine bewegliche Sperrklinke (34), die einen Verriegelungsfinger (35) umfasst, wobei die bewegliche Sperrklinke (34) schwenkbar in einer Ebene (P) um eine Schwenkachse am Getriebegehäuse (1) zwischen einer Verriegelungsposition, in der der Verriegelungsfinger (35) in die Verriegelungsaussparung (45) eingreift, und einer gelösten Position, in der der Verriegelungsfinger (35) aus der Verriegelungsaussparung (45) ausgerückt ist, montiert ist, wobei die bewegliche Sperrklinke (34) eine Nockenfläche (36) umfasst;
- einen Aktuator (37), der eine Schubvorrichtung (38) bewegt, wobei die Schubvorrichtung (38) einen Nockenfolger aufweist, der geeignet ist, sich auf der Nockenfläche (36) zu bewegen, um die bewegliche Sperrklinke von der gelösten Position in die Verriegelungsposition zu bewegen;
- eine Führungsschiene (27) mit einer Führungswand (30), die die Bewegung der Schubvorrichtung (38) führt, und einer Positionierungswand (300);
wobei die Positionierungswand (300) der Führungsschiene (27) in den Positionierungsschlitz der Aufnahme (2) eingesetzt ist.

2. Blockiermechanismus nach Anspruch 1, bei dem die Positionierungswand (300) und die Führungswand (30) eine einzige Wand (301) bilden, wobei die Positionierungswand (300) mindestens einen Vorsprung (300, 300') aufweist, der sich im Wesentlichen in einer Richtung parallel zur Bewegung der Schubvorrichtung (38) von der Führungswand (30) aus erstreckt, wobei der mindestens eine Vorsprung (300, 300') der ersten Positionierungsfläche (23) und/oder der zweiten Positionierungsfläche (24, 24') der Aufnahme (2) gegenüberliegt.

3. Blockiermechanismus nach Anspruch 2, wobei die Positionierungswand (300) mindestens zwei Vorsprünge (300, 300') aufweist, die sich im Wesentlichen in einer Richtung parallel zur Bewegung der Schubvorrichtung (38) erstrecken, wobei die mindestens zwei Vorsprünge (300, 300') der ersten Positionierungsfläche (23) und/oder der zweiten Positionierungsfläche (24, 24') der Aufnahme (2) gegenüberliegen.

4. Blockiermechanismus nach einem der vorhergehenden Ansprüche, bei dem die erste Positionierungsfläche (23) der Aufnahme (2) und die zweite Positionierungsfläche (24, 24') der Aufnahme (2) parallel sind.

5. Blockiermechanismus nach einem der vorhergehenden Ansprüche, bei dem eine Breite (L) des Positionierungsschlitzes, eine Dicke (e) der Positionierungswand (300) und ein Funktionsspiel definiert sind, das der Differenz zwischen der Breite (L) und der Dicke (e) entspricht, wobei der Wert des Funktionsspiels zwischen 0,05 und 1 mm liegt, wobei der Wert des Funktionsspiels vorzugsweise zwischen 0,2 und 0,6 mm liegt.

6. Blockiermechanismus nach einem der vorhergehenden Ansprüche, bei dem die Aufnahme (2) eine erste Seitenfläche (21) gegenüber und in Abstand zu einer zweiten Seitenfläche (22) und eine erste Längsfläche (23) zwischen der ersten Seitenfläche (21) und der zweiten Seitenfläche (22) aufweist, wobei die Führungsschiene (27) entsprechend der Aufnahme (2) eine dritte Seitenfläche (28) gegenüber und in Abstand zu einer vierten Seitenfläche (29) und die Führungswand (30), die sich in Längsrichtung zwischen der dritten Seitenfläche (28) und der vierten Seitenfläche (29) erstreckt, aufweist, und wobei die dritte Seitenfläche (28), die vierte Seitenfläche (29) und die Führungswand (30) der Führungsschiene (27) jeweils der ersten Seitenfläche (21), der zweiten Seitenfläche (22) und der ersten Längsfläche (23) der Aufnahme (2) gegenüberliegen, um eine Bewegung der Führungsschiene (27) in alle Richtungen der Ebene (P) zu begrenzen.

7. Blockiermechanismus nach Anspruch 6, bei dem die erste Seitenfläche (21) der Aufnahme und/oder die zweite Seitenfläche (22) der Aufnahme keine gemeinsame Kante mit der ersten Längsfläche (23) der Aufnahme besitzen, wobei die erste Seitenfläche (21) der Aufnahme, die zweite Seitenfläche (22) der Aufnahme und die erste Längsfläche (23) der Aufnahme durch einen Bearbeitungsprozess erhalten und durch Wände aus Rohmaterial miteinander verbunden sind.

8. Blockiermechanismus nach einem der vorhergehenden Ansprüche, bei dem die Aufnahme eine erste Aussparung (25) aufweist und bei dem die Führungsschiene (27) eine zweite Aussparung (32) aufweist, wobei die erste Aussparung (25) der Aufnahme und die zweite Aussparung (32) der Führungsschiene durchgehend sind und dazu bestimmt sind, den Durchgang des Aktuators (37) zu ermöglichen.

9. Blockiermechanismus nach einem der vorhergehenden Ansprüche, bei dem die Führungsschiene (27) einen Rücklaufanschlag (28) und/oder einen Endanschlag (29) umfasst, der die Bewegung der Schubvorrichtung (38) über die Führungsschiene (27) hinaus verhindert.

10. Blockiermechanismus nach Anspruch 9, bei dem der Rücklaufanschlag durch die dritte Seitenfläche (28) der Führungsschiene (27) und/oder der Endanschlag durch die vierte Seitenfläche (29) der Führungsschiene (27) gebildet wird.

11. Blockiermechanismus nach einem der vorhergehenden Ansprüche, bei dem der Positionierungsschlitz der Aufnahme (2) ferner mindestens eine Bodenfläche (47, 47') parallel zur Ebene (P) aufweist, und entsprechend die Positionierungswand (300) der Führungsschiene (27) ferner mindestens eine untere Fläche (31, 31') parallel zur Ebene P aufweist, wobei die mindestens eine untere Fläche (31, 31') der mindestens einen Bodenfläche (47, 47') gegenüberliegt, um die Bewegung der Führungsschiene (27) in einer Richtung senkrecht zur Ebene (P) zu begrenzen.

12. Blockiermechanismus nach einem der vorhergehenden Ansprüche, bei dem ein Befestigungsmittel die Führungsschiene (27) am Getriebegehäuse (1) befestigt, wobei das Befestigungsmittel eine Bewegung der Führungsschiene in einer Richtung senkrecht zur Ebene (P) blockiert.

13. Blockiermechanismus nach einem der vorhergehenden Ansprüche, bei dem die Führungsschiene (27) einstückig aus einem gebogenen Metallmaterialstreifen, insbesondere aus einem Stahlblech, gebildet ist.

14. Übertragungssystem, umfassend eine Welle, die mit mindestens einer Verriegelungsaussparung (45) ausgestattet ist, und einen Blockiermechanismus nach einem der Ansprüche 1 bis 13.

## Claims

1. Locking mechanism capable of rotationally blocking a shaft of a vehicle equipped with at least one locking recess (45), the locking mechanism comprising:
- a transmission housing (1) including a housing (2), the housing (2) having a first positioning face (23) and a second positioning face (24, 24'), the first positioning face (23) and the second positioning face (24, 24') forming a positioning slot;
- a movable pawl (34) comprising a locking finger (35), the movable pawl (34) being pivotally mounted in a plane (P) around a pivot axis on the transmission housing (1) between a locking position in which the locking finger (35) is engaged in the locking recess (45) and a released position in which the locking finger (35) is disengaged from said locking recess (45), the movable pawl (34) comprising a cam surface (36);
- an actuator (37) that moves a pushing device (38), the pushing device (38) having a cam follower capable of moving on the cam surface (36) in order to move the movable pawl from the released position to the locking position;
- a guide rail (27) having a guide wall (30) guiding the movement of the pushing device (38) and a positioning wall (300);
the positioning wall (300) of the guide rail (27) being inserted into the positioning slot of the housing (2).

2. Locking mechanism according to claim 1 wherein the positioning wall (300) and the guide wall (30) form a single wall (301), the positioning wall (300) comprising at least one protrusion (300, 300') extending substantially in a direction parallel to the movement of the pushing device (38) from the guide wall (30), the at least one protrusion (300, 300') facing the first positioning face (23) and/or the second positioning face (24, 24') of the housing (2).

3. Locking mechanism according to claim 2, the positioning wall (300) comprising at least two protrusions (300, 300') extending substantially in a direction parallel to the movement of the pushing device (38), the at least two protrusions (300, 300') facing the first positioning face (23) and/or the second positioning face (24, 24') of the housing (2).

4. Locking mechanism according to any one of the preceding claims wherein the first positioning face (23) of the housing (2) and the second positioning face (24, 24') of the housing (2) are parallel.

5. Locking mechanism according to any one of the preceding claims wherein a width (L) of the positioning slot, a thickness (e) of the positioning wall (300), and an operating clearance equal to the difference between the width (L) and the thickness (e) are defined, the value of the operating clearance being between 0.05 and 1 mm, the value of the operating clearance being preferably between 0.2 and 0.6 mm.

6. Locking mechanism according to any one of the preceding claims wherein the housing (2) has a first lateral face (21) facing and distant from a second lateral face (22) and a first longitudinal face (23) located between the first lateral face (21) and the second lateral face (22), wherein the guide rail (27) has, corresponding to the housing (2), a third lateral face (28) facing and distant from a fourth lateral face (29) and the guide wall (30) extending longitudinally between the third lateral face (28) and the fourth lateral face (29), and wherein the third lateral face (28), the fourth lateral face (29) and the guide wall (30) of the guide rail (27) are respectively facing the first lateral face (21), the second lateral face (22) and the first longitudinal face (23) of the housing (2) in order to limit movement of the guide rail (27) in all directions of the plane (P).

7. Locking mechanism according to claim 6 wherein the first lateral face (21) of the housing and/or the second lateral face (22) of the housing do not have a common edge with the first longitudinal surface (23) of the housing, the first lateral face (21) of the housing, the second lateral face (22) of the housing and the first longitudinal surface (23) of the housing being obtained by a machining process and connected to each other by raw material walls.

8. Locking mechanism according to any one of the preceding claims wherein the housing has a first notch (25) and, wherein the guide rail (27) has a second notch (32), the first notch (25) of the housing and the second notch (32) of the guide rail being through-holes and being intended to allow the passage of the actuator (37).

9. Locking mechanism according to any one of the preceding claims wherein the guide rail (27) comprises an anti-return stop (28) and/or an end stop (29) preventing the movement of the pushing device (38) beyond said guide rail (27).

10. Locking mechanism according to claim 9, wherein the anti-return stop is formed by the third lateral face (28) of the guide rail (27) and/or the end stop is formed by the fourth lateral face (29) of the guide rail (27).

11. Locking mechanism according to any one of the preceding claims wherein the positioning slot of the housing (2) further comprises at least one bottom face (47, 47') parallel to the plane (P), and correspondingly, the positioning wall (300) of the guide rail (27) further comprises at least one lower face (31, 31') parallel to the plane P, the at least one lower face (31, 31') facing the at least one bottom face (47, 47') so as to limit the movement of the guide rail (27) in a direction perpendicular to the plane (P).

12. Locking mechanism according to any one of the preceding claims, wherein a fastening means fixes the guide rail (27) to the transmission housing (1), the fastening means blocking a movement of the guide rail in a direction perpendicular to the plane (P).

13. Locking mechanism according to any one of the preceding claims wherein the guide rail (27) is formed as a single piece in a bent metal material strip, particularly in a steel sheet.

14. Transmission system comprising a shaft equipped with at least one locking recess (45) and a locking mechanism according to any one of claims 1 to 13.
